Europäisches Patentamt

European Patent Office

Office européen des brevets

(19)

(11) Veröffentlichungsnummer : **0 377 862 B1**

## (12) EUROPÄISCHE PATENTSCHRIFT

(45) Veröffentlichungstag der Patentschrift :
**11.11.92 Patentblatt 92/46**

(51) Int. Cl.$^5$ : **B65G 53/24, B65G 53/56**

(21) Anmeldenummer : **89123319.9**

(22) Anmeldetag : **16.12.89**

(54) Pneumatische Saugförderanlage zum Fördern rieselfähiger Materialien.

(30) Priorität : **05.01.89 DE 3900172**

(43) Veröffentlichungstag der Anmeldung :
**18.07.90 Patentblatt 90/29**

(45) Bekanntmachung des Hinweises auf die
Patenterteilung :
**11.11.92 Patentblatt 92/46**

(84) Benannte Vertragsstaaten :
**DE FR GB IT**

(56) Entgegenhaltungen :
**DE-A- 2 060 803**
**DE-A- 2 361 279**

(56) Entgegenhaltungen :
**DE-A- 2 436 595**
**DE-B- 1 249 617**
**DE-C- 1 117 042**
**FR-A- 2 524 440**

(73) Patentinhaber : **AZO GmbH & Co**
**Rosenberger Strasse**
**W-6960 Osterburken (DE)**

(72) Erfinder : **Link, Otmar**
**Sonnenhalde 32**
**W-6967 Buchen-Götzingen (DE)**

(74) Vertreter : **Dr.-Ing. Hans Lichti Dipl.-Ing. Heiner**
**Lichti Dipl.-Phys. Dr. Jost Lempert**
**Postfach 41 07 60 Bergwaldstrasse 1**
**W-7500 Karlsruhe 41 (DE)**

EP 0 377 862 B1

## Beschreibung

Die Erfindung betrifft ein Belüftungsventil für eine pneumatische Saugförderanlage zum Fördern rieselfähiger Materialien in einer Förderleitung zwischen einer Aufgabeund einer Abgabestelle, das in der Förderleitung angeordnet ist und ein Verschlußorgan aufweist, das zum Abbau des Unterdrucks und Leersaugen des stromabwärts liegenden Teils der Förderleitung geöffnet wird. Ferner betrifft die Erfindung eine saugförderanlage mit einem solchen Belüftungsventil.

In Saugförderanlagen für rieselfähige Materialien müssen in den Förderleitungen in der Regel Belüftungsventile vorgesehen werden, um beispielsweise am Ende eines Förderzyklus die Förderleitung ganz oder teilweise leerzusaugen (DE-A-23 61 279). Dies kann beispielsweise dann notwendig sein, wenn lange Förderstrecken zu überwinden sind und vermieden werden soll, daß beim Absperren des Förderstroms, stillsetzen des Sauggebläses oder dergleichen, das noch in der Leitung befindliche Material sich absetzt. Dieses Material erschwert die neuerliche Inbetriebnahme der saugförderanlage und kann sogar zu Verstopfungen führen. Ferner ist das vollständige oder teilweise Leersaugen dann notwendig, wenn beispielsweise verschiedene Materialien von verschiedenen Aufgabestellen durch eine einzige Förderleitung an eine oder mehrere Abgabestellen transportiert werden, um in der Förderleitung oder an der Abgabestelle ein vermischen der Materialien zu vermeiden. Ganz besonders stellt sich das Problem dann, wenn verschiedene Materialien aus jeweils eigenen Vorratsbehältern über eine entsprechende Anzahl von Förderleitungen wahlweise verschiedenen Abgabestellen zugeführt und dabei gleichfalls vermischen vermieden werden sollen (DE-A-24 36 595).

Zu diesem Zweck wird an geeigneter stelle der Förderleitung ein Belüftungsventil vorgesehen. Im einfachsten Fall wird in die Förderleitung ein T-Stück eingesetzt, in dessen T-Steg das ventil eingebaut ist (DE-A-23 61 279). Durch Öffnen des Belüftungsventils wird der Förderstrom unterbrochen, indem der Unterdruck stromaufwärts des Belüftungsventils zusammenbricht und das Sauggebläse die Luft über das Belüftungsventil ansaugt. Die Förderleitung wird stromabwärts des Belüftungsventils leergesaugt, während das Material stromaufwärts liegenbleibt.

Herkömmliche Belüftungsventile haben den Nachteil, daß die Förderung nicht schlagartig unterbrochen wird, also zumindest über einen gewissen Zeitraum Partikel aus dem stromaufwärts des Belüftungsventil liegenden Abschnitt der Förderleitung nachgesaugt werden. Je nach Einbau-und Strömungsverhältnissen ist die Zeitdauer, innerhalb der noch einzelne Partikel nachgefördert werden, kürzer oder länger. Dieser Umstand führt insbesondere bei der Mehrkomponenten-Förderung zu entsprechender Verzögerung in den Förderzyklen. Bei Mehrkomponenten-Anlagen mit gravimetrischer oder volumetrischer Zuteilung der Komponenten auf verschiedene Abgabestellen ergibt sich das weitere Problem, daß die Genauigkeit der Materialzumessung leidet.

Es ist auch bereits vorgeschlagen worden, den Ansaugstutzen mit dem Belüftungsventil nicht senkrecht zur Leitungs-achse, sondern in einem spitzen Winkel zu dieser mit einer Neigung in Strömungsrichtung anzuordnen. Hierdurch werden jedoch in erster Linie nur die Strömungswiderstände an der Ansaugstelle, nicht jedoch. der Nachsaugeffekt vermindert. Im Gegenteil tritt hierbei eine Art Injektorwirkung auf, die zu einem ständigen Mitreißen von Partikeln aus dem stromaufwärts gelegenen Leitungsabschnitt führt.

Ferner sind zum Aufnehmen von schüttgut an einem Schüttgutlager Ansaugdüsen oder sogenannte Saugrüssel bekannt (DE-B-1 117 042), die aus zwei konzentrischen Rohren bestehen, von denen das innere Rohr Teil einer Förderleitung ist und an ein sauggebläse angeschlossen ist und das äußere eine Zuluftleitung bildet, deren Ende das Ende der Förderleitung etwas überragt. Durch die Umlenkung der Luft von dem äußeren in das innere Rohr entsteht eine das Schüttgut mißtreißende Injektorwirkung. Der Einströmquerschnitt der Zuluftleitung läßt sich zur Einstellung der Fördermenge steuern. Um die Förderung zu unterbrechen, ist in der Zuluftleitung eine konzentrische Blende vorgesehen, die bei Förderbetrieb ringförmige Aussparungen an der Zuluftleitung verschließt. Durch axiales verschieben der Blende werden die Aussparungen geöffnet, so daß der Unterdruck in der Zuluftleitung und an der Ansaugdüse zusammenbricht. Hier erfolgt also die Unterbrechung nicht innerhalb des Förderstromes, sondern durch Steuerung der Zuluft an der Ansaugstelle.

Der Erfindung liegt die Aufgabe zugrunde, ein Belüftungsventil für eine saugförderanlage des eingangs geschilderten Aufbaus so auszubilden, daß eine schlagartige und zugleich vollständige Unterbrechung des Förderstroms im Bereich des Belüftungsventils möglich ist. Dabei soll insbesondere bei saugförderanlagen mit mehreren Aufgabestellen und/oder mehreren Abgabestellen ein schnelles und effektives Leersaugen einzelner Förderleitungen möglich sein.

Diese Aufgabe wird erfindungsgemäß dadurch gelöst, daß zur Bildung des Belüftungsventils die Förderleitung quer zur Leitungsachse über ihren gesamten Umfang unter Bildung einer Treustelle unterbrochen ist und daß das Verschlußorgan auf der Förderleitung axial verschieblich und von dieser geführt ist und in der Schließlage die Trennstelle verschließt und in der Öffnungslage einen zur Umgebung offenen Ringspalt freigibt.

Die Erfindung verwendet nicht ein herkömmliches ventil, bei dem ein verschlußorgan gegen einen Ventilsitz schließt, sondern es ist die Förderleitung über ihren gesamten Umfang unterbrochen. Mittels eines auf der Leitung axial verschieblich geführten Verschlußorgans kann an der Unterbrechungsstelle ein Ringspalt freigelegt werden, durch den die Umgebungsluft angesaugt wird. Dabei strömt die Luft über den gesamten äußeren Umfang in die Förderleitung ein und führt zu einem sofortigen Abriß der Strömung an der Unterbrechungsstelle. Praktische Versuche haben ferner gezeigt, daß durch den schlagartigen Lufteinbruch über den gesamten Umfang ein kurzes stück des stromaufwärts liegenden Leitungsabschnittes noch leergesaugt wird, so daß im Bereich des Belüftungsventils kein Material liegenbleibt. Auch kann es nicht passieren, daß einzelne Partikel aus diesem Leitungsabschnitt über einen längeren Zeitraum noch angesaugt werden. Auf diese Weise ist es möglich, in kürzester Frist und in effektiver Weise den Förderstrom zu unterbrechen und den stromabwärts liegenden Leitungsabschnitt leerzusaugen. Wird das verschlußorgan axial so verschoben, daß der Ringspalt verschlossen wird, so ist wieder eine unterbrechungsfreie Förderung möglich.

Das erfindungsgemäße Prinzip läßt sich auf verschiedene Arten verwirklichen. Eine bevorzugte Ausführungsform zeichnet sich dadurch aus, daß das verschlußorgan auf wenigstens einem der stromaufwärts und stromabwärts des Ringspaltes liegenden Abschnitte der Förderleitung geführt ist.

Bei einer Ausgestaltung der vorgenannten Ausführungsform ist vorgesehen, daß das verschlußorgan mit seinem einen Ende auf dem einen Abschnitt der Förderleitung geführt ist und mit seinem anderen Ende in der schließlage an den anderen Abschnitt stumpf anschließt.

Bei diesem Ausführungsbeispiel enden also die stromaufwärts und stromabwärts der Trennstelle liegenden Leitungsabschnitte mit einem Spalt von gewisser Breite, der von dem auf einem der Leitungsabschnitte geführten verschlußorgan überbrückt wird, wobei das verschlußorgan in der schließlage am jeweils gegenüberliegenden Leitungsabschnitt stumpf anschließt.

Statt dessen kann auch vorgesehen sein, daß das verschlußorgan als Ringschieber ausgebildet und den Ringspalt überbrückend auf den stromaufwärts und stromabwärts desselben liegenden Abschnitten der Förderleitung geführt ist.

Während beim ersten Ausführungsbeispiel die Abdichtung zwischen Verschlußorgan und Leitungsabschnitt stirnseitig erfolgt, geschieht dies bei der letztgenannten Ausführungsform umfangsseitig.

Eine weiterhin besonders vorteilhafte Ausführungsform zeichnet sich dadurch aus, daß das Verschlußorgan an seiner Außenseite einen zylindrischen Bund aufweist, der in einem das Verschlußorgan umgebenden Druckmittelzylinder geführt und - als Kolben wirkend - beidseitig mit Druckmittel beaufschlagbar ist.

Die vorgenannte Ausbildung des Verschlußorgans hat den Vorteil, daß es zugleich einen Teil des für seine Bewegung notwendigen Antriebs aufweist, nämlich den Kolben eines das Verschlußorgan umgebenden Druckmittelzylinders bildet. Auf diese Weise ergibt sich eine einfache und äußerst platzsparende Ausbildung. Ferner wird durch die konzentrisch wirkende Schließ- und Öffnungskraft eine einwandfreie Funktion gewährleistet, insbesondere wird dadurch vermieden, daß auf das verschiebbare Verschlußorgan Kippkräfte wirken, die die Führung des Verschlußorgans und dessen Funktion beeinträchtigen könnten.

Der den Kolben des Druckmittelzylinders bildende Bund kann als Freiflugkolben ausgebildet sein, dessen Bewegung durch die stirnseitigen Abschlüsse des Zylinders begrenzt ist. Diese Ausbildung empfiehlt sich dann, wenn das Verschlußorgan als Ringschieber ausgebildet ist. Vorzugsweise jedoch ist vorgesehen, daß das Verschlußorgan mit seinen stromaufwärts und stromabwärts des Bundes liegenden Enden den Zylinder an seinen stirnseitigen Abschlüssen durchgreift. Diese Ausbildung empfiehlt sich vor allem dann, wenn das Verschlußorgan in der Schließlage an den einen Leitungsabschnitt stumpf anschließt. Auch hat diese Ausführungsform den Vorteil, daß die Abdichtung der Förderleitung nur gegenüber dem Umgebungsdruck, nicht aber gegenüber dem erhöhten Arbeitsdruck des Druckmittelzylinders erfolgen muß.

Zur Lösung der zweiten Teilaufgabe betrifft die Erfindung ferner eine pneumatische Saugförderanlage zum wahlweisen Fördern rieselfähiger Materialien von wenigstens einer Aufgabestelle zu wenigstens einer Abgabestelle mit einem zwischen den beiden liegenden Verteiler, dessen Eingang über je eine Förderleitung mit einer der Aufgabestellen und dessen Ausgang über je eine Zuteilleitung mit einer der Abgabestellen verbunden ist und der eine zwischen dem Eingang und dem Ausgang angeordnete Verteilerleitung aufweist, die wahlweise eine der Förderleitungen mit einer der Zuteilleitungen verbindet.

Bei Saugförderanlagen des vorgenannten Aufbaus kann das Material von einer Aufgabestelle zu mehreren Abgabestellen, von mehreren Aufgabestellen zu einer Abgabestelle oder aber von mehreren Aufgabestellen zu mehreren Abgabestellen transportiert werden. Um hierbei mit einem Minimum an Förderleitungen auskommen zu können und ferner die Materialien wahlweise von einer der Aufgabestellen zu einer der Abgabestellen zu fördern, ist zwischen diesen beiden Stellen ein Verteiler angeordnet. Hierbei kann es sich beispielsweise um eine Art Rohrweiche handeln, die linear entlang der Enden der Förderleitungen und/oder der Zuteilleitungen verschiebbar ist. Statt dessen kann es sich auch um einen sogenannten Drehrohrverteiler handeln, bei dem die Förderleitungen und/oder die Zuteilleitungen auf einem Kreis angeordnet sind und die Verteilerleitung um eine den Kreismittelpunkt einschließende Drehachse drehbar ist.

Bei einer solchen Saugförderanlage ist erfindungsgemäß vorgesehen, daß am Eingang der Verteilerleitung ein erfindungsgemäß ausgebildetes Belüftungsventil angeordnet ist.

Mit dieser Ausbildung wird der Vorteil erreicht, daß nur der allen Förder- und Zuteilleitungen gemeinsame Leitungsteil, nämlich die Verteilerleitung, und die daran anschließende(n) Zuteilleitung(en), also diejenigen Leitungsteile, in denen eine Vermischung der verschiedenen Komponenten eintreten könnte und vermieden werden sollte, leergesaugt wird. Damit wird die Förderung auf der kürzestmöglichen Strecke wirksam unterbrochen.

Ist der Verteiler in Form eines Drehrohrverteilers ausgebildet, an dessen Eingang die Förderleitungen konzentrisch um eine Achse in einer Radialebene enden und die Verteilerleitung mit ihrem eingangsseitigen Ende in dieser Radialebene auf dem Anordnungskreis der Förderleitungen drehbar und mit ihrem anderen Ende in der Drehachse gelagert ist, so ist in bevorzugter Ausführung vorgesehen, daß die Verteilerleitung mit ihrem eingangsseitigen Ende mit axialem Abstand von der Radialebene unter Bildung des Ringspaltes angeordnet, das Verschlußorgan auf diesem Ende geführt und bis zum stumpfen Anschluß an eine der Förderleitungen verschiebbar ist.

Bei der vorgenannten Ausführungsform ist weiterhin von Vorteil, wenn die Verteilerleitung mit ihrem eingangsseitigen Ende an einem in der Drehachse gelagerten Träger befestigt ist, der zugleich den Druckmittelzylinder für das Verschlußorgan aufnimmt.

Diese Ausführung trägt vor allem den beengten Platzverhältnissen bei einem Drehrohrverteiler in optimaler Weise Rechnung.

Schließlich kann bei dieser Ausführungsform vorgesehen sein, daß die Druckmittelleitungen für den Druckmittelzylinder in einen mit dem gegenüberliegenden Ende der Verteilerleitung verbundenen Lagerteil des Drehlagers hineingeführt und über je einen Ringkanal mit Druckmittelversorgungsleitungen, die an einem ortsfesten Lagerteil des Drehlagers enden, verbunden sind.

Nachstehend ist die Erfindung an Hand eines in der Zeichnung wiedergegebenen Ausführungsbeispiels beschrieben. In der Zeichnung zeigen:

Figur 1 Einen Axialschnitt eines Drehrohrverteilers;

Figur 2 das in Fig. 1 mit II bezeichnete Detail in vergrößertem Maßstab;

Figur 3 eine Draufsicht auf den Drehrohrverteiler gemäß Fig. 1 und

Figur 4 das untere Ende des Drehrohrverteilers gemäß Fig.1 in vergrößertem Maßstab.

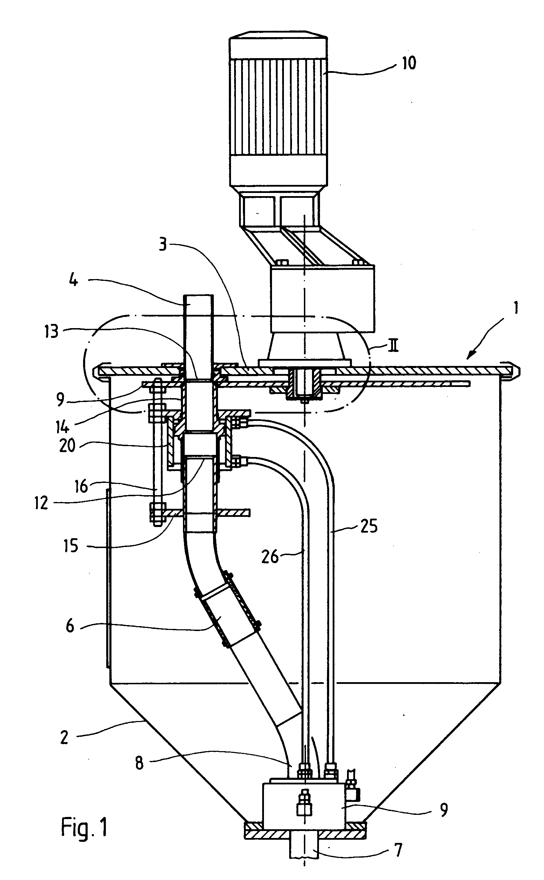

Der Drehrohrverteiler gemäß Fig. 1 ist zwischen einer Mehrzahl nicht gezeigter Aufgabestellen des Materials, z.B. in Form von das Material enthaltenden Vorratsbehältern, und einer oder mehreren Abgabestellen angeordnet. Sofern mehrere Abgabestellen vorhanden sind, schließt sich an die Darstellung gemäß Fig. 1 spiegelbildlich zur Horizontalen ein Bauteil gleicher Ausbildung, wie es in Fig.1 gezeigt ist, an.

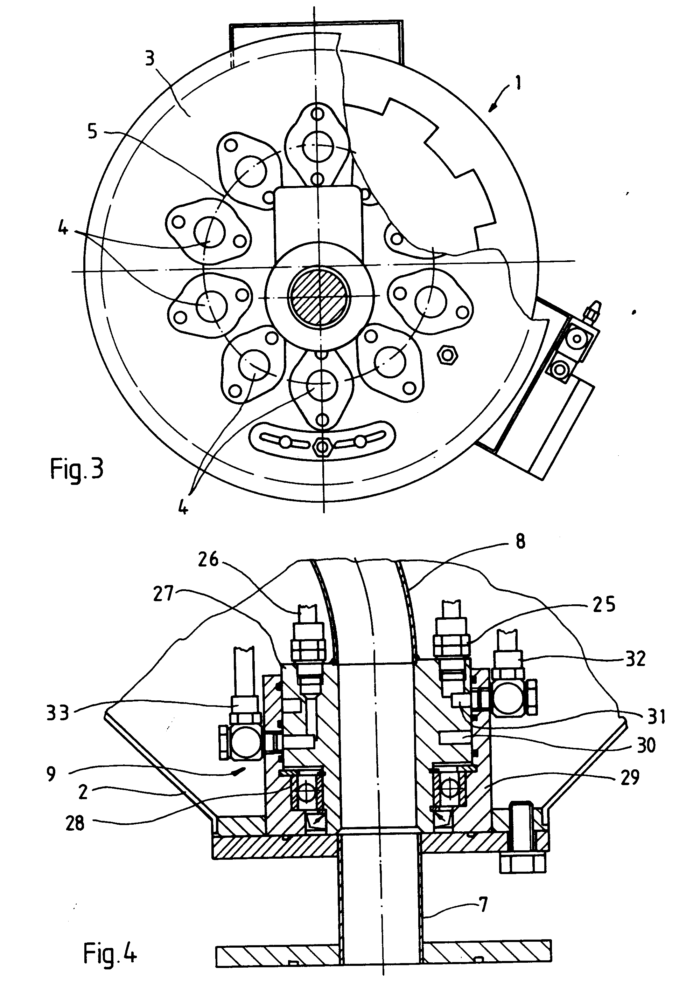

Der Drehrohrverteiler 1 weist ein Gehäuse 2 mit einem stirnseitigen Abschluß 3 auf. Am stirnseitigen Abschluß 3 enden die Förderleitungen 4. Bei dem gezeigten Ausführungsbeispiel münden, wie Fig.3 zeigt, eine Vielzahl solcher Förderleitungen 4 auf einem Kreis 5 an dem stirnseitigen Abschluß 3 des Drehrohrverteilers.

Innerhalb des Gehäuses 2 ist eine Verteilerleitung 6 angeordnet, welche wahlweise eine der Förderleitungen 4 mit einer Abgangsleitung 7 verbindet. Die Abgangsleitung 7 kann die Zuteilleitung zu einer Abgabestelle oder aber die Brücke zu einem spiegelbildlich angeordneten Drehrohrverteiler sein, dessen Verteilerleitung eine der Abgabestellen entsprechende Anzahl von Zuteilleitungen mit jeweils einer Förderleitung 4 verbindet.

Die Verteilerleitung 6 ist mit ihrem der Zuteilleitung 7 zugekehrten Ende 8 in einem Drehlager 9 gelagert, dessen Achse mit dem Mittelpunkt des Anordnungskreises 5 der Förderleitungen 4 zusammenfällt. Das andere Ende der Verteilerleitung 6 sitzt an einem Träger 9, der mittels eines Antriebsmotors 10 um die gleiche Drehachse drehbar ist, so daß dieses Ende auf den Anordnungskreis 5 der Förderungsleitungen 4 bewegbar ist.

An diesem Ende der Verteilerleitung 6 ist das insgesamt mit 11 bezeichnete Belüftungsventil angeordnet. Zur Bildung des Belüftungsventils ist das stirnseitige Ende 12 der Verteilerleitung 6 mit Abstand von dem stirnseitigen Ende 13 der Förderleitung 4 angeordnet. Der dadurch an der Trennstelle entstehende freie Raum ist von einem Verschlußorgan 14 überbrückt. Die Verteilerleitung 6 ist im Bereich ihres Endes 12 über einen Flansch 15 und eine Tragstange 16 mit dem Träger 9 verbunden.

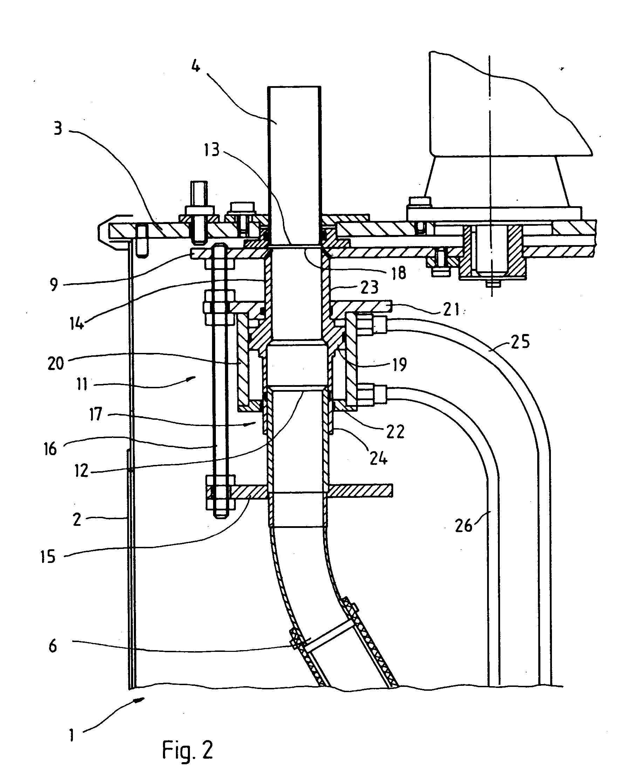

In Figur 2 ist der Aufbau des Belüftungsventils 11 näher erkennbar. Dessen Verschlußorgan 14 ist beim gezeigten Ausführungsbeispiel rohrartig ausgebildet und mit seinem einen Ende 17 auf dem Ende der Verteilerleitung 6 geführt, während es mit seinem anderen Ende 18 in der Schließlage stumpf an das Ende 13 der Förderleitung 4 anschließt. In der Öffnungslage wird das Verschlußorgan 14 - in der Zeichnung nach unten - axial verschoben, so daß zwischen dem Ende 13 der Förderleitung 4 und der Stirnseite 18 ein offener Ringspalt entsteht, durch den die Umgebungsluft angesaugt und die Förderung in der Förderleitung 4 unterbrochen wird.

Beim gezeigten Ausführungsbeispiel weist das Verschlußorgan 14 außenseitig einen Bund 19 auf, der innerhalb eines Druckmittelzylinders 20 angeordnet ist, dessen stirnseitige Abschlüsse 21,22 von je einem rohrförmigen Teil 23,24 des Verschlußorgans durchgriffen werden. In den Druckmittelzylinder 20 kann von beiden Enden her über Anschlußleitungen 25,26 Druckmittel, z.B. Druckluft eingespeist werden, so daß der Bund 19 des Verschlußorgans 14 einen doppeltwirkenden Kolben bildet, der das Verschlußorgan zwischen Schließ- und Öffnungslage bewegt.

Die Druckmittelleitungen 25,26 sind innerhalb des Drehrohrverteilers nach unten in das Drehlager 9 hineingeführt. Sie münden dort in dem drehenden Teil 27, das über Kugellager 28 im drehfesten Teil 29 gelagert ist. Im drehenden Teil 27 sind in axialem Abstand voneinander Ringnuten 30,31 vorgesehen, mit denen die Druckmittelleitungen 25,26 über Bohrungen in Verbindung stehen. An die Ringnuten 30,31 sind die Versorungsleitungen 32,33 angeschlossen.

## Patentansprüche

1. Belüftungsventil für eine pneumatische Saugförderanlage zum Fördern rieselfähiger Materialien in einer Förderleitung (4, 6, 7) zwischen einer Aufgabeund einer Abgabestelle,das in der Förderleitung angeordnet ist und ein Verschlußorgan (14) aufweist, das zum Abbau des Unterdrucks und Leersaugen des stromabwärts liegenden Teils der Förderleitung geöffnet wird, dadurch gekennzeichnet, daß zur Bildung des Belüftungsventils (11) die Förderleitung (4, 6, 7) quer zur Leitungsachse über ihren gesamten Umfang unter Bildung einer Trennstelle unterbrochen ist, und daß das Verschlußorgan (14) auf der Förderleitung axial verschieblich und von dieser geführt ist und in der Schließlage die Trennstelle verschließt und in der Öffnungslage einen zur Umgebung offenen Ringspalt freigibt.

2. Belüftungsventil nach Anspruch 1, dadurch gekennzeichnet, daß das Verschlußorgan (14) auf wenigstens einem der stromaufwärts und stromabwärts des Ringspaltes liegenden Abschnitte der Förderleitung geführt ist.

3. Belüftungsventil nach Anspruch 1 oder 2, dadurch gekennzeichnet, daß das Verschlußorgan (14) mit seinem einen Ende (24) auf dem einen Abschnitt (6) der Förderleitung (4, 6, 7) geführt ist und mit seinem anderen Ende (23) in der Schließlage an den anderen Abschnitt stumpf anschließt.

4. Belüftungsventil nach Anspruch 1 oder 2, dadurch gekennzeichnet, daß das Verschlußorgan (14) als Ringschieber ausgebildet und den Ring

spalt überbrückend auf den stromaufwärts und stromabwärts desselben liegenden Abschnitten (4, 6) der Förderleitung (4, 6, 7) geführt ist.

5. Belüftungsventil nach einem der Ansprüche 1 bis 4, dadurch gekennzeichnet, daß das Verschlußorgan (14) an seiner Außenseite einen zylindrischen Bund (19) aufweist, der in einem das Verschlußorgan (14) umgebenden Druckmittelzylinder (20) geführt und - als Kolben wirkend - beidseitig mit Druckmittel beaufschlagbar ist.

6. Belüftungsventil nach Anspruch 5, dadurch gekennzeichnet, daß das Verschlußorgan (14) mit seinen stromaufwärts und stromabwärts des Bundes (19) liegenden Enden (23,24) den Zylinder an seinen stirnseitigen Abschlüssen (21,22) durchgreift.

7. Pneumatische Sau förderanlage zum wahlweisen Fördern rieselfähiger Materialien von wenigstens einer Aufgabestelle zu wenigstens einer Abgabestelle mit einem zwischen den beiden liegenden Verteiler (1), dessen Eingang über je eine Förderleitung (4) mit einer der Aufgabestellen und dessen Ausgang über je eine Zuteilleitung (7) mit einer der Abgabestellen verbunden ist und der eine zwischen dem Eingang und dem Ausgang angeordnete Verteilerleitung (6) aufweist, die wahlweise eine der Förderleitungen (4) mit einer der Zuteilleitungen verbindet, dadurch gekennzeichnet, daß am Eingang der Verteilerleitung (6) ein Belüftungsventil (11) nach einem der Ansprüche 1 bis 6 angeordnet ist.

8. Saugförderanlage nach Anspruch 7 mit einem Verteiler in Form eines Drehrohrverteilers (1), an dessen Eingang die Förderleitungen (4) konzentrisch um eine Drehachse in einer Radialebene enden und die Verteilerleitung (6) mit ihrem eingangsseitigen Ende in dieser Radialebene auf dem Anordnungskreis der Förderleitungen drehbar und mit ihrem anderen Ende (8) in der Drehachse gelagert ist, dadurch gekennzeichnet, daß die Verteilerleitung (6) mit ihrem eingangsseitigen Ende (12) mit axialem Abstand von der Radialebene unter Bildung des Ringspaltes angeordnet, das Verschlußorgan (14) auf diesem Ende geführt und bis zum stumpfen Anschluß an eine der Förderleitungen (4) verschiebbar ist.

9. Saugförderanlage nach Anspruch 8, dadurch gekennzeichnet, daß die Verteilerleitung (6) mit ihrem eingangsseitigen Ende (12) an einem in der Drehachse gelagerten Träger (9) befestigt ist, der zugleich den Druckmittelzylinder (20) für das Verschlußorgan (14) aufnimmt.

10. Saugförderanlage nach Anspruch 8 oder 9, dadurch gekennzeichnet, daß die Druckmittelleitungen (25, 26) für den Druckmittelzylinder (20) in einem mit dem gegenüberliegenden Ende (8) der Verteilerleitung (6) verbundenen Lagerteil (27) des Drehlagers (9) hineingeführt und über je einen Ringkanal (30, 31) mit Druckmittelversorgungsleitungen (32, 33), die an einem ortsfesten Lagerteil (29) des Drehlagers (9) enden, verbunden sind.

**Claims**

1. Vent valve for a pneumatic suction conveyor means for conveying free-flowing materials in a delivery line (4, 6, 7) between a feed station and a discharge station, which is located in the delivery line and has a closure member (14), which is opened for reducing the vacuum and sucking empty the downstream part of the delivery line, characterized in that for forming the vent valve (11) the delivery line (4, 6, 7) is interrupted transversally to the line axis over its entire circumference to form a separation area and that the closure member (14) is axially displaceable on the delivery line and is guided by the latter and in the closed position closes the separation area and in the open position frees an annular clearance open to the environment.

2. Vent valve according to claim 1, characterized in that the closure member (14) is guided on at least one of the sections of the delivery line located upstream and downstream of the annular clearance.

3. Vent valve according to claims 1 or 2, characterized in that one end (24) of the closure member (14) is guided on one section (6) of the delivery line (4, 6, 7) an with its other end (23) is butt-joined to the other section in the closed position.

4. Vent valve according to claims 1 or 2, characterized in that the closure member (14) is constructed as an annular slide valve and is guided on the upstream and downstream sections (4, 6) of the delivery line (4, 6, 7) with respect to the annular clearance so as to bridge the latter.

5. Vent valve according to one of the claims 1 to 4, characterized in that on its outside the closure member (14) has a cylindrical collar (19), which is guided in a pressure cylinder (20) surrounding the closure member (14) and, acting as a piston, can be supplied on either side with pressure.

6. Vent valve according to claim 5, characterized in that with its ends (22, 24) located upstream and downstream of the collar (19) the closure member (14) passes through the cylinder at its frontal seals (21, 22).

7. Pneumatic suction conveyor means for the delivery of free-flowing materials from at least one feed station to at least one selected discharge station with a distributor (1) located between them and whose intake is connected by means of in each case one delivery line (4) to one of the feed stations and whose outlet is connected by means of in each case one feeding line (7) to one of the discharge stations, said distributor having a distributing line (6) located between the intake and the outlet and which in selective manner connects one of the delivery lines (4) to one of the feeding lines, characterized in that at the intake of the distributing line (6) is arranged a vent valve (11) according to one of the claims 1 to 6.

8. Suction conveyor means according to claim 7 with a distributor in the form of a rotary tube distributor (1), on whose intake the delivery lines (4) terminate concentrically about a rotation axis in a radial plane and the distributing line (6) is positioned with its intake side end in rotary manner in said radial plane on the positioning circle of delivery lines and is mounted with its other end (8) in the rotation axis, characterized in that the intake side end (12) of the distributing line (6) is positioned with axial spacing from the radial plane to form the annular clearance, and that the closure member (14) is guided on said end and can be displaced up to the butt-joining to one of the delivery lines (4).

9. Suction conveyor means according to claim 8, characterized in that the distribution line (6) is fixed with its intake side end (12) to a support (9) pivoted in the rotation axis and which at the same time receives the pressure cylinder (20) for the closure member (14).

10. Suction conveyor means according to claims 8 or 9, characterized in that the pressure lines (25, 26) for the pressure cylinder (20) are introduced into a bearing part (27) of the pivot bearing (9) connected to the opposite end (8) of the distribution line (6) and are connected by means of in each case one ring duct (30, 31) to pressure supply lines (32, 33) terminating at a fixed bearing part (29) of the pivot bearing (9).

**Revendications**

1. Soupape d'aération pour une installation de transport pneumatique à succion pour transporter de la matière coulante dans une conduite de transport (4,6,7), entre un point d'amenée et un point d'enlèvement, soupape disposée dans la conduite de transport et qui présente un organe d'obturation (14) ouvert en vue d'annuler la dépression et la succion de vidange de la partie aval de la conduite de transport, caractérisée en ce que, pour former la soupape d'aération (11), la conduite de transport (4,6,7) est interrompue transversalement à son axe, sur la totalité de sa périphérie, en formant un point de séparation, et en ce que l'organe d'obturation (14) est guidé sur la conduite de transport, par celle-ci et mobile axialement, et, en position de fermeture, obture le point de séparation et, en position d'ouverture, libère un interstice annulaire, ouvert vis à vis de l'ambiance.

2. Soupape d'aération selon la revendication 1, caractérisée en ce que l'organe d'obturation (14) est guidé sur au moins l'une des sections de la conduite de transport qui se trouvent en amont et en aval de l'interstice annulaire.

3. Soupape d'aération selon la revendication 1 ou 2, caractérisée en ce que l'organe d'obturation (14) est guidé, par une première extrémité (24), sur une section (6) de la conduite de transport (4,6,7) et, par son autre extrémité (23), se raccorde bord à bord, en position de fermeture, à l'autre section

4. Soupape d'aération selon la revendication 1 ou 2, caractérisée en ce que l'organe d'obturation (14) est réalisé sous forme d'obturateur annulaire et est guidé, en pontant l'interstice annulaire, sur les sections (4,6) de la conduite situées en amont et en aval de celui-ci.

5. Soupape d'aération selon l'une des revendications 1 à 4, caractérisée en ce que l'organe d'obturation (14) présente sur sa face extérieure une collerette cylindrique (19) qui est guidée dans un cylindre à fluide sous pression (20) entourant l'organe d'obturation (14) et susceptible d'être sollicité - en agissant comme un piston - des deux côtés par un fluide sous pression.

6. Soupape d'aération selon la revendication 5, caractérisée en ce que l'organe d'obturation (14) pénètre, par ses extrémités (23, 34) situés en amont et en aval de la collerette (19), le cylindre à ses délimitations frontales (21, 22).

7. Installation de transport pneumatique à succion, pour transporter de façon sélectionnée des matériaux coulants d'au moins un point d'amenée à au moins un point d'enlèvement, avec un distributeur (1) disposé entre les deux points, dont l'entrée est respectivement reliée à l'un des points d'amenée, par l'intermédiaire d'une conduite de transport (4), et dont la sortie est respectivement reliée à l'un des points d'enlèvement, par l'intermédiaire d'une conduite d'adduction (7), et du distributeur (1) qui présente une conduite de distributeur (6), disposée entre l'entrée et la sortie et assurant de façon sélectionnée la liaison de l'une des conduites de transport (4) à l'une des conduites d'adduction, caractérisée en ce qu'une soupape d'aération (11) selon l'une des revendications 1 à 6 est disposée à l'entrée de la conduite de distributeur (6).

8. Installation de transport à succion selon la revendication 7, avec un distributeur se présentant sous la forme d'un distributeur à tube rotatif (1), à l'entrée duquel les conduites de transport (4), montées concentriquement sur un axe de rotation, finissent dans un plan radial et la conduite de division (6) étant montée, par son extrémité d'entrée, tournante dans ce plan radial sur le cercle où sont disposées les conduites de transport, et montée dans l'axe de rotation par son autre extrémité (8), caractérisée en ce que la conduite de distributeur (6) est disposée par son extrémité d'entrée (12) avec un écart axial par rapport au plan radial, en formant un interstice annulaire, l'organe d'obturation (14) étant guidé sur cette extrémité et déplaçable, jusqu'à se raccorder bord à bord sur l'une des conduites de transport (4).

9. Installation de transport à succion selon la revendication 8, caractérisée en ce que la conduite de distributeur (6) est fixée par son extrémité d'entrée (12) sur un support (9) monté dans l'axe de rotation (6), qui supporte en même temps le cylindre à fluide sous pression (20) pour l'organe d'obturation (14).

10. Installation de transport à succion selon la revendication 8 ou 9, caractérisée en ce que les conduites de fluide sous pression (25,26) pour le cylindre à fluide sous pression (20) sont guidées dans une partie de palier (27), reliée à l'extrémité (8) opposée de la conduite de distributeur (6), du palier de rotation (9) et reliées chacune, par un canal annulaire (30,31), à des conduites d'alimentation de fluide sous pression (32,33) s'achevant sur une partie de Palier (29) localement fixe du palier de rotation (9).

Fig. 1

Fig. 2

Fig. 3

Fig. 4